# EUROPEAN PATENT SPECIFICATION

(11) **EP 3 211 254 B1**
(45) Date of publication and mention of the grant of the patent: **26.09.2018**
(21) Application number: 17165477.5
(22) Date of filing: 05.04.2013
(51) Int. Cl.: F16B 39/10

(54) **SPHERICAL BEARING**
KUGELLAGER
ROULEMENT SPHÉRIQUE

(43) Date of publication of application: 30.08.2017
(62) Divisional of application: 13715894.5
(73) Proprietor: Schaublin SA, 2800 Delémont (CH)
(72) Inventor: MONNIN, Alain, 2822 Courroux (CH); FRELÉCHOX, Jean-Marie, 2830 Courrendlin (CH)
(74) Representative: Seemann & Partner Patentanwälte mbB

(56) References cited:
- EP-A1- 1 726 836
- EP-A2- 2 362 108
- WO-A1-01/16498

## Description

### FIELD OF THE INVENTION

This invention relates to a spherical bearing, in particular according to the preamble of claim 1 (EP 1 726 836 A1).

### DESCRIPTION OF THE RELATED ART

Bearings can be used to reduce friction between moving parts of a mechanical assembly. Typically, bearings include an inner ring disposed at least partially in an outer ring. The outer ring typically includes a flanged end and a threaded end. The bearing can be secured in a bore of a housing portion of the mechanical assembly. For example, the outer ring can be positioned in the bore with the threaded end extending out of the bore. A washer can be disposed on the threaded end. A locking nut can be screwed onto the threaded end and tightened to compress the washer between the locking nut and the housing. The use of the washer can help secure the bearing to the housing so that the bearing remains in the same position during operation of the mechanical assembly.

Some washers are configured to be positioned on the threaded end of the outer ring in a predetermined position to optimize locking of the bearing in the housing. However, during assembly the washer may be installed incorrectly. Such incorrect assembly may lead to undesirable loosening of the nut and slippage of the bearing during operation. In addition, an improperly sized washer could be confused with a washer designed for a particular bearing and then installed on the bearing. Use of an improperly sized washer could also lead to undesirable loosening of the nut and slippage of the bearing during operation, or lead to washer failure, for example bending or cracking, as a result of a non-matching surface between the housing and washer or washer and nut. Moreover, some washers are free to move or slip relative to the nut during assembly and after the nut is tightened in place on the threaded end. Such washers may be prone to slippage and could result in loosening of the nut.

The document EP 2 362 108 A2 discloses a self-locking bolt-nut assembly. The bolt-nut assembly includes a bolt (100), a nut (200) tightened on the bolt (100), a washer (300) provided between the bolt (100) and the nut (200). The bolt (100) includes a bolt head (110) and a bolt body (120). The bolt body (120) has an external thread thereon. An insertion guide groove (130) is formed in the bolt body along the longitudinal direction. The nut (200) has stop protrusions (210) which are provided on the nut (200) and are arranged in a circumferential direction at regular intervals. The washer (300) includes a rotation-preventive protrusion (310) which protrudes from a circumferential inner edge of the washer (300) towards a center thereof and is inserted into the insertion guide groove (130), and elastic protrusions (320) which are provided on the washer (300) and are arranged in a circumferential direction at regular intervals. Thus, when the nut (200) which has been in contact with the washer (300) is tightened, the elastic protrusions (320) are elastically bent while passing over first surfaces of corresponding stop protrusions (210), and then are returned to original states thereof by elastic force so that elastic protrusions (320) are locked to second surfaces of the stop protrusions (210).

The document WO 97/18925 A1 discloses a spindle nut (10) and a locking device for securing the nut (10) on a spindle (50) in a non-rotative position relative to the spindle (50). The assembly comprises the spindle nut (10), an antirotation spring (20) and a spring backup plate (30) mounted on the spindle (50). The antirotation spring (20) and spring backup plate (30) may be formed as a single unit.

The document GB 2 129 898 A discloses a bearing locknut assembly providing locking between a locking plate keyed to a shaft and the locknut 17 itself. Captive on the locknut 17 are a thrust washer 45 and the locking plate 20 keyed at 20 to engage a slot in the shaft which receives the locknut 17. The locking plate 20 is provided with an odd member of blind holes 23 spaced around it, and the locknut 17 is provided with four holes at equal spacing around it; a setscrew 22 engages selected holes in the locknut 17 and the locking plate 20 to give Vernier adjustment. The assembly eliminates completely any face runout of the locknut by utilizing a part-spherical washer thrust face on the thrust washer 45 seated against a mating spherical surface on the locking plate 20.

### SUMMARY OF THE INVENTION

In one aspect in an annular washer with tabbed appendages on both the inner and outer circumferential edges is provided.

As disclosed herein there is provided a washer. The washer has an annular body with a radially outer circumferential edge and a radially inner circumferential edge. The annular body has a first planar surface on one axial end and a second planar surface on an opposite axial end. The outer circumferential edge of the washer has a plurality of first tabs extending out and away from the first planar surface and the outer circumferential edge. The inner circumferential edge of the washer has at least two second tabs extending therefrom and in a direction axially away from the first planar surface. Each of the first tabs is selectively bendable in order to engage with a notched portion of a nut.

In another embodiment as disclosed herein there is provided a washer. The washer has an annular body with a radially outer circumferential edge and a radially inner circumferential edge. The washer has a first planar surface on one axial end and a second planar surface on the opposite axial end. The outer circumferential edge of the washer has a plurality of first tabs extending out and away from the first planar surface and the outer circumferential edge, and each of the first tabs extend from a first bend proximate to the outer circumferential edge and is substantially flat. The inner circumferential edge of the washer has at least two second tabs extending therefrom and in a direction axially away from the first planar surface, and each of the second tabs extends from a second bend at the inner circumferential edge and is substantially flat. Each of the first tabs are selectively bendable in order to engage with a notched portion of a nut.

The invention resides in a spherical bearing. The spherical bearing has an inner ring at least partially disposed within an outer ring. A first end of the outer ring has an external threaded area with a first groove and a second formed therein. The first groove and the second groove are asymmetrically positioned circumferentially. The spherical bearing further includes an annular nut with an internal thread and a plurality of notches formed in an outer circumferential portion of the nut wherein the notches are axially oriented. The spherical bearing further includes a washer with an annular body with a radially outer circumferential edge and a radially inner circumferential edge defining an opening. The internal threads of the nut are positioned in the opening of the washer. The nut has a first planar surface on one axial end and a second planar surface on the opposite axial end. The outer circumferential edge of the washer has a plurality of first tabs extending out and away from the first planar surface and the outer circumferential edge. The inner circumferential edge of the washer has at least two second tabs extending therefrom and in a direction axially away from the first planar surface. Each of the first tabs is selectively bendable in order to engage with a notched portion of a nut. There are at least one more first tabs on the washer than notches on the nut.

### BRIEF DESCRIPTION OF THE DRAWINGS

FIG. 1A is an exploded perspective view of a spherical bearing assembly of the present invention;
FIG. 1B is a partial view of a groove and threads of an outer ring, of the spherical bearing assembly of FIG. 1A;
FIG. 1C is a partial top view of a notch in a nut, of the spherical bearing assembly of FIG. 1A;
FIG. 2 is a cross-sectional view of the spherical bearing assembly with a washer installed;
FIG. 3 is a partial cross-sectional view of one embodiment of the washer;
FIG. 4 is a top view of the washer;
FIG. 4A is a partial top view of the washer;
FIG. 4B is a partial cross-sectional view of a shallow second tab and a deep second tab of the washer;
FIG. 5A is a top view of the washer disposed behind the nut where no first tabs are aligned with the notches of the nut;
FIG. 5B is a top view of the washer disposed behind the nut where some of the first tabs are aligned with the notches of the nut;
FIG. 5C is a top view of the washer disposed behind the nut where some of the first tabs are bent to engage the notches of the nut;
FIG. 6A is a cross-sectional view of the washer and the nut prior to the washer engaging the nut;
FIG. 6B is a cross-sectional view of the washer and the nut where the washer is engaging the nut;
FIG. 7A is a partial cross-sectional view of a first tab of the washer and the nut;
FIG. 7B is a partial cross-sectional view of the first tab of the washer bent and engaged with the nut;
FIG. 8A is a partial cross-sectional view of the washer positioned correctly in the bearing assembly showing a second tab engaging the groove; and
FIG. 8B is a partial cross-sectional view of the second tab positioned incorrectly in the bearing assembly showing a large gap between the washer and a housing.

### DETAILED DESCRIPTION OF THE INVENTION

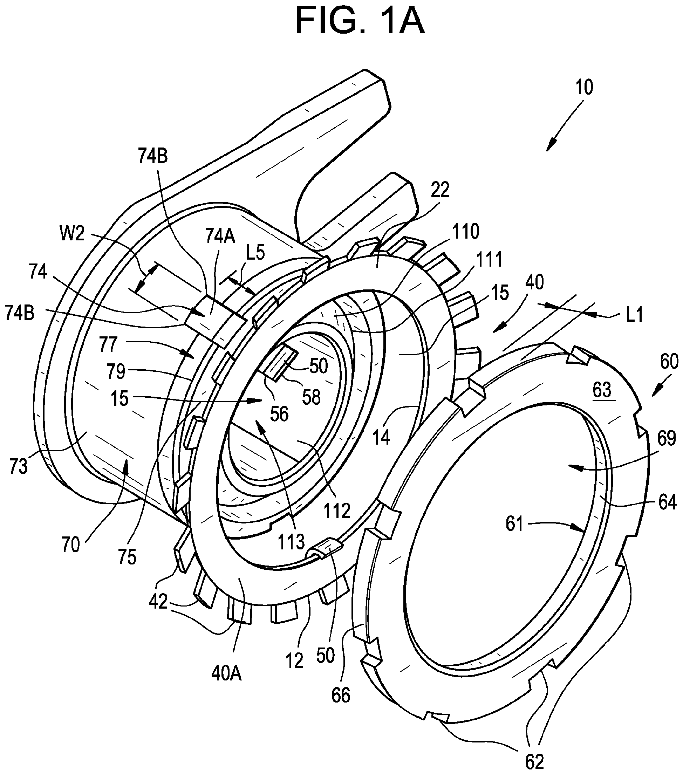

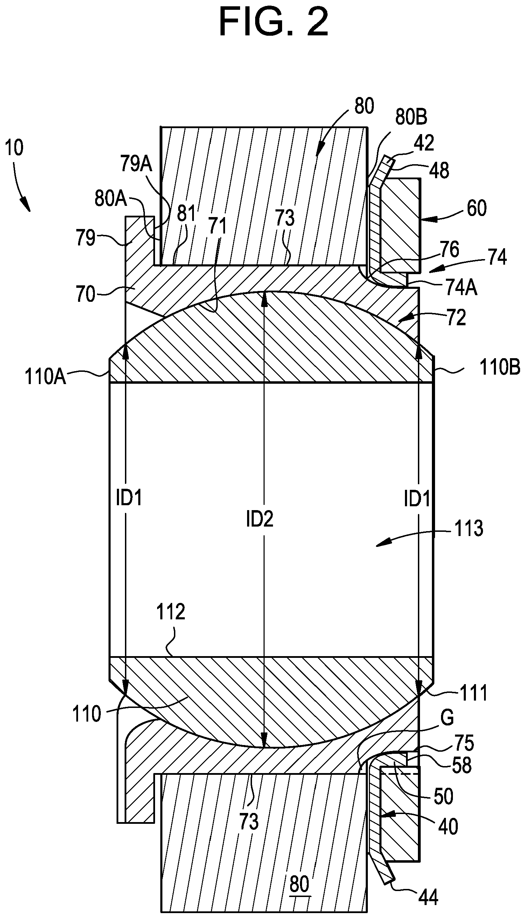

Referring to FIGS. 1A and 2, a spherical bearing assembly is generally indicated by the numeral 10. The spherical bearing assembly 10 includes an outer ring 70 having a substantially spherical interior surface 71 that defines an interior area 72 as shown in FIG. 1A. The outer ring 70 includes a substantially cylindrical exterior surface 73. One end of the outer ring 70 terminates in a flange 79 which defines a shoulder 79A on an axially inward facing surface of the flange 79. A portion of the exterior surface 73 adjacent to an opposing end of the outer ring 70 has threads 75 formed therein. Referring to FIG. 2, the threads 75 have at least one groove 74 formed therein. Each of the grooves 74 extends axially from an axial facing surface 80B of a housing 80 towards the flange 79.

Referring to FIG. 1A, the spherical bearing assembly 10 has a washer 40 having a first planar surface 22 on one axial end and a second planar surface 32 on the opposite axial end. The spherical bearing assembly 10 has an annular nut 60 having a first planar surface 61 and a second planar surface 63 on an opposing axial ends of an annular body 60A.

Referring to FIG. 2, the spherical bearing assembly 10 includes a ball 110 having a substantially spherical outer surface 111 and a cylindrical interior surface 112 extending between axial ends 110A and 110 B of the ball 110 and defining a bore 113 extending therethrough. The ball 110 is positioned in the interior area 72 of the outer ring 70 with end portions 110A and 110B of the ball 110 extending out of the interior area 72. The interior area 72 has an interior diameter ID1 that is sized to receive end portions 110A and 110B of ball 110. Interior area 72 further has an interior diameter ID2 that is sized to receive ball 110.

As illustrated in FIG. 2 the bearing assembly 10 is installed in the housing 80. The housing 80 has a substantially cylindrical interior surface 81 that is configured to accept the outer ring 70 such that the exterior surface 73 of the outer ring engages the interior surface 81 of the housing 80. The housing 80 defines a first axial facing surface 80A and the second axial facing surface 80B located on opposing surfaces of the housing. The shoulder 79A abuts the first axial facing surface 80A. The washer 40 is mounted on the threads 75 and is compressed against the second axial facing surface 80B by the nut 60.

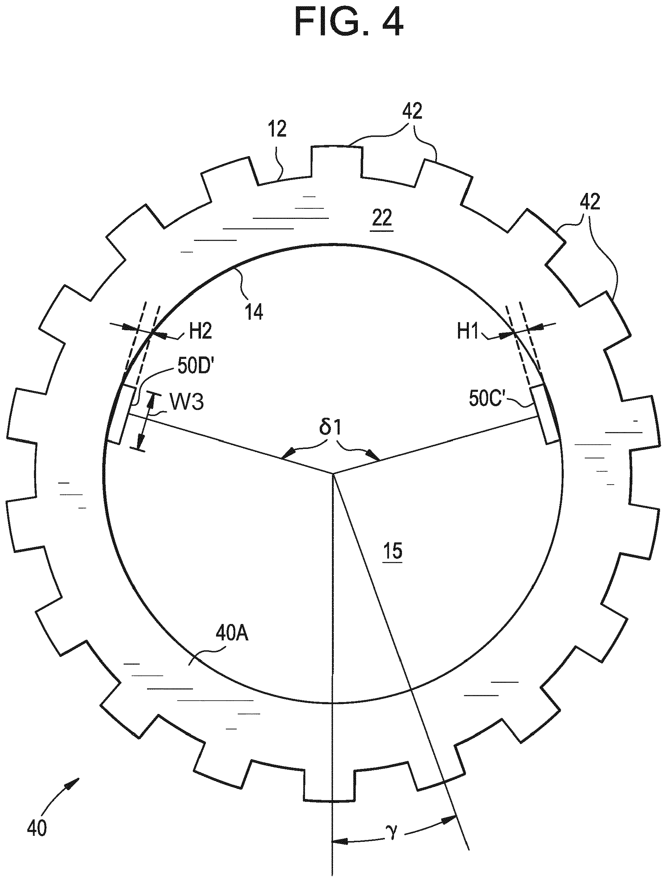

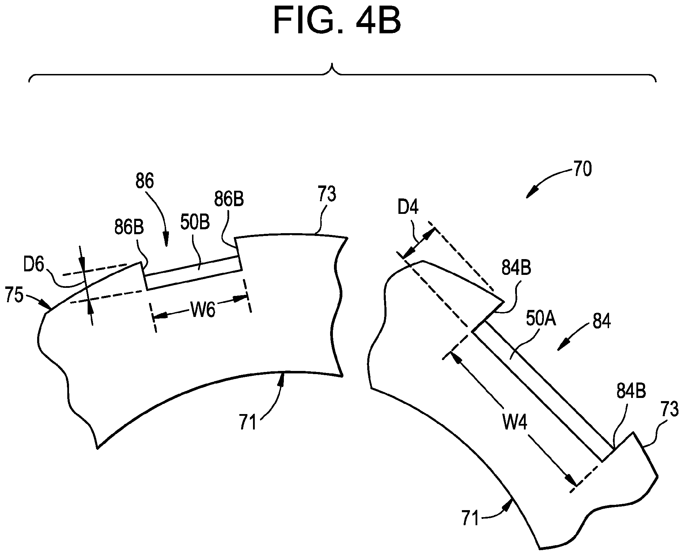

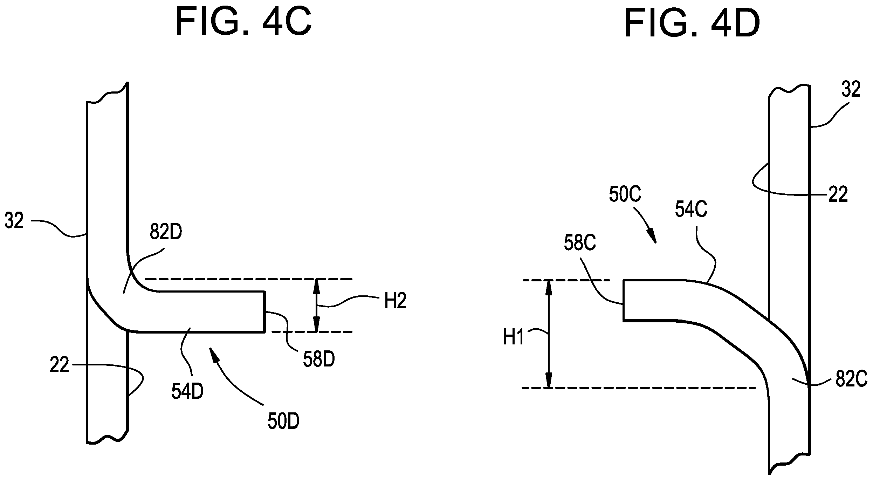

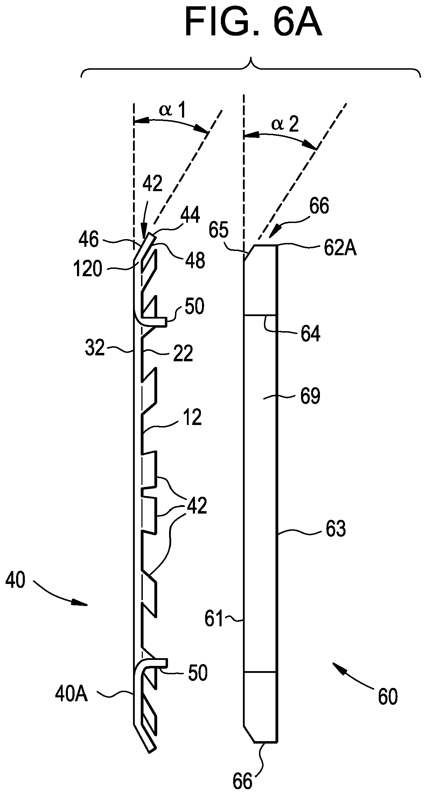

Referring now to FIGS. 4 and 6A, the washer 40 has an annular body 40A defining a radially outer circumferential edge 12 and a radially inner circumferential edge 14 defining an opening 15. The outer circumferential edge 12 has a plurality of first tabs 42 extending therefrom and in a first direction away from the first planar surface 22 and away from the outer circumferential edge 12. For example, in the illustrated embodiment of FIG. 4, the washer includes eighteen first tabs 42 spaced evenly at an angle γ relative to one another, shown here as about 20 degrees. Referring to the embodiment shown in FIG. 4, the first tabs 42 are spaced symmetrically along the outer circumferential edge 12 of the washer 40. In another embodiment, the first tabs 42 are spaced asymmetrically along the outer circumferential edge 12. In another embodiment, the first tabs 42 are identically sized. In yet another embodiment, the first tabs 40 are different sizes.

In one embodiment, first planar surface 22 is coated with a dry film lubricant. This reduces the stress on the assembly that is directed to the washer while tightening the nut. In another embodiment, second planar surface 32 is coated with a galvanic barrier coating.

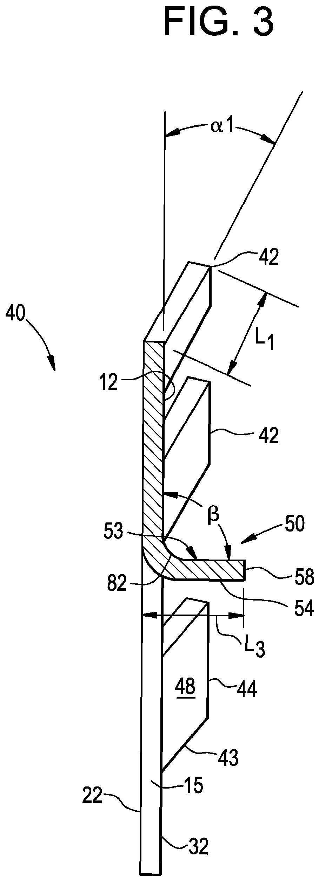

Referring to FIG. 3, in one embodiment, the inner circumferential edge 14 of the washer 40 has two second tabs 50 extending therefrom and in a direction axially away from the first planar surface 22. The second tabs 50 extend away from the first planar surface 22 at first bend 82 by an angle β relative to the first planar surface 22. In the embodiment shown in FIG. 3, the angle β is about 90 degrees. Each of the second tabs 50 is positioned circumferentially at an angle δ1 relative to one another to engage one of the grooves 74 of the housing 70. In one embodiment shown in FIG. 4, the angle δ1 is about 150 degrees. Although the second tabs 50 are shown throughout the specification to extend from the inner circumferential edge 14 of the washer 40 in a direction axially away from the first planar surface 22, it is understood that in some embodiments, the second tabs 50 extend from the inner circumferential edge 14 of the washer 40 in a direction axially away from the second planar surface 32.

Each of the second tabs 50 has a first lateral surface 53 and a second planar surface 54, which are parallel. As shown in FIG. 1A, each of the second tabs 50 further has a peripheral edge 56 which is perpendicular to and formed between the first planar surface 53 and the second planar surface 54. Each of the second tabs 50 further has an end portion 58 formed between and substantially perpendicular to the first planar surface 53 and the second planar surface 54.

As shown in FIG. 4, each of the grooves 74 is positioned circumferentially at an angle δ2 relative to one another to engage a second tab 50 of the washer 40. In one embodiment shown in FIG 4, the angle δ2 is about 150 degrees. Although angle δ1 is the angle between each of the second tabs 52 of the washer 40 and angle δ2 is the angle between the grooves 74 of the threads 75, the magnitudes are approximately the same.

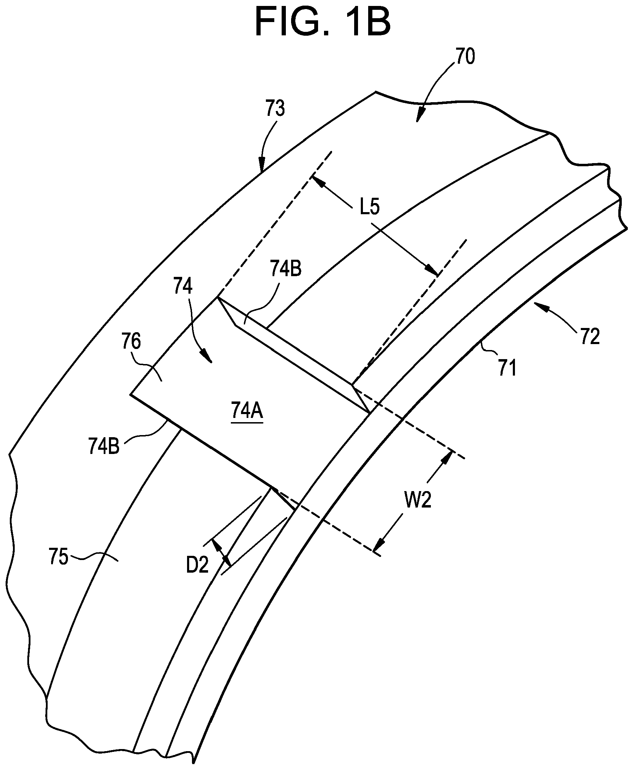

Referring to FIG. 1B, each of the grooves 74 has a planar surface 74A that engages with a planar surface 53 of one of the second tabs 50. Each of the grooves 74 has an axial length L5, which is sized to accept one of the second tabs 50. Each of the grooves 74 has side walls 74B which are perpendicular to the planar surface 74A and extend axially from the threads 75 toward the flange 79. The side walls 74B are separated at a distance of W2, which is sized to accept the width W3 of one of the second tabs 50. An interior end 76 of each groove 74 has a radius as a result of machining during manufacture.

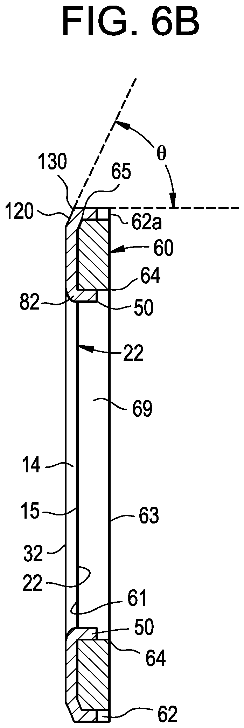

Referring to FIGs. 6A and 6B, the second planar surface 54 of one of the second tabs 50 engages the interior circumferential edge 64 of the nut 60. While two second tabs 50 are shown and described herein, the present invention is not limited in this regard as the washer 40 may employ only one second tab or more than two second tabs. When the bearing housing 10 is assembled, each of the second tabs 50 is engaged with a groove 74. There are at least as many grooves 74 as second tabs 50.

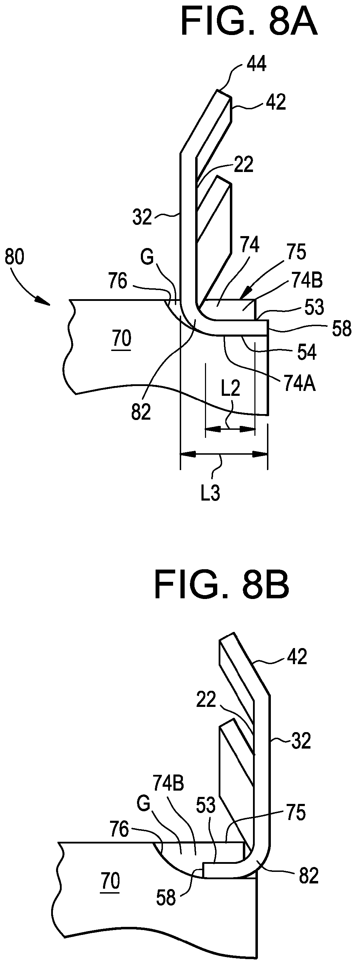

As shown in FIG. 8A, each of the second tabs 50 has an axial length L3 that is longer than the length L5 of the grooves 74. The groove radius 76 is separated from the second planar surface 32 of the washer 40 by a gap G, therefore there is reduced stress on the second tabs 50 at the second bend 82. In contrast, when the washer 40 is disposed incorrectly as shown in FIG. 8B, that is, with first planar surface 22 of the washer 40 facing the second axial facing surface 80B, the length L3 is sufficient to prohibit the washer 40 from engaging the threads 75 and further prohibits the inner circumferential edge 64 of the nut 60 from engaging the threads 75. As shown in FIG. 8B, the gap G is large enough that the washer 40 is not stable on the threads 75 and the nut 60 cannot be tightened to the second axial facing surface 80B.

Referring to the embodiment shown in FIG. 4, there are at least one more first tabs 42 than second tabs 50. In another embodiment, there are an equal number of first tabs 42 and second tabs 50. In another embodiment, there are fewer first tabs 42 than second tabs 50. In another embodiment, first tabs 42 and second tabs 50 are the same length, that is, L1 as shown in FIG. 3, is substantially equal to L2, as shown in FIG. 8A. In another embodiment, first tabs 42 and second tabs 50 are different lengths, that is, L1 may be greater than or less than L2.

Referring to the embodiment shown in FIG. 4, the second tabs 50 are spaced asymmetrically along the inner circumferential edge 14. In another embodiment, as shown in FIG. 4A, the grooves 84, 86 of the outer ring 70 are sized to accommodate second tabs that are different widths, such as, for example, a wide second tab 50A and a narrow second tab 50B, and/or second tabs that are different heights, such as for example, a shallow second tab 50D and a deep second tab 50C. As shown in FIG. 4A, a first groove 84 has a width W4 sized to accept the width of the wide second tab 50A. A second groove 86 has a width W6 sized to accept the width of a narrow second tab 50B. In this embodiment, the washer 40 may only be installed on the housing 80 in one configuration, that is, with the wide second tab 50A engaging the first groove 84. In this embodiment, if the washer 40 is incorrectly installed where the wide second tab 50A is disposed over the second groove 86, the wide second tab 50A will not fit between side walls 86B.

As shown in FIG. 4B, a shallow second tab 50D has a height H2 measured from a first bend 82D to a second planar surface 54D. The height H2 corresponds to a depth D6, as shown in FIG. 4A, of a groove 86.

Referring now to FIG. 4C, a deep second tab 50C of the washer 40 has a height H1 measured from a first bend 82C to a second planar surface 54C. The height H1 corresponds to a depth D4, as shown in FIG. 4A, of a groove 84.

In one embodiment, the height H1 is sufficient that the washer 40 may only be installed on the housing 80 in one configuration, namely with the deep second tab 50C, having the height H1,engaging the first groove 84, having the depth D4. In this embodiment, if the washer 40 is incorrectly installed where the deep second tab 50C, having a height H1, is disposed over the groove 86, having the depth D6, the deep second tab 50C will prevent the washer 40 from correctly engaging with the housing 80, that is, the deep second tab 50C will force the shallow second tab 50D out of alignment with the inner circumferential edge 64 of the nut 60 and the nut 60 cannot be tightened.

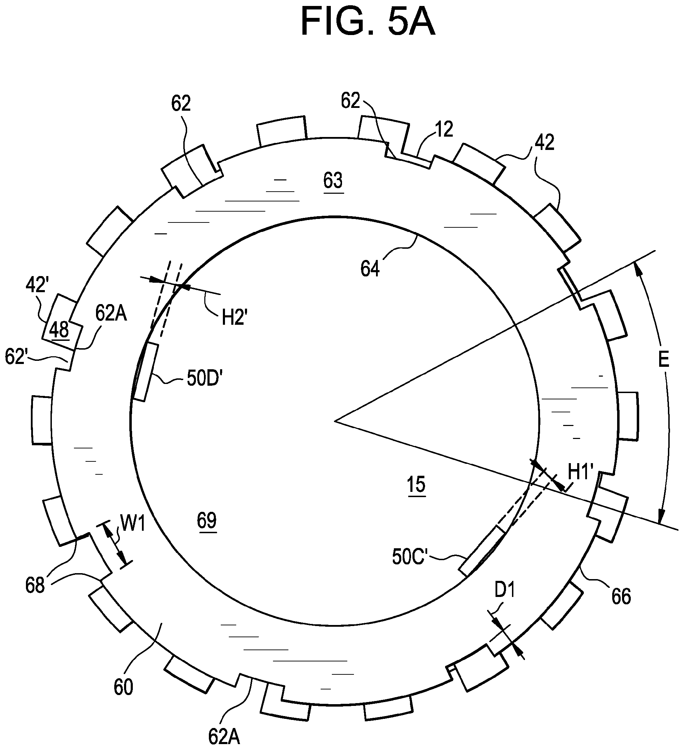

As shown in FIGS. 4 and 5A, in one embodiment, the washer 40 has a deep second tab 50C' extending axially inward by the height H1' as compared to a shallow second tab 50D' which extends axially inward by the height H2'.

Referring to FIG. 1A, the nut 60 has an annular body 60A defining a radially outer circumferential edge 66 and a threaded radially inner circumferential edge 64 defining an opening 69. The inner circumferential edge 64 is threaded and engages with the threads 75 of the outer ring 70. There are one or more notches 62 axially formed in the outer circumferential edge 66. The outer circumferential edge 66 extends between the second planar surface 63 and the first planar surface 61.

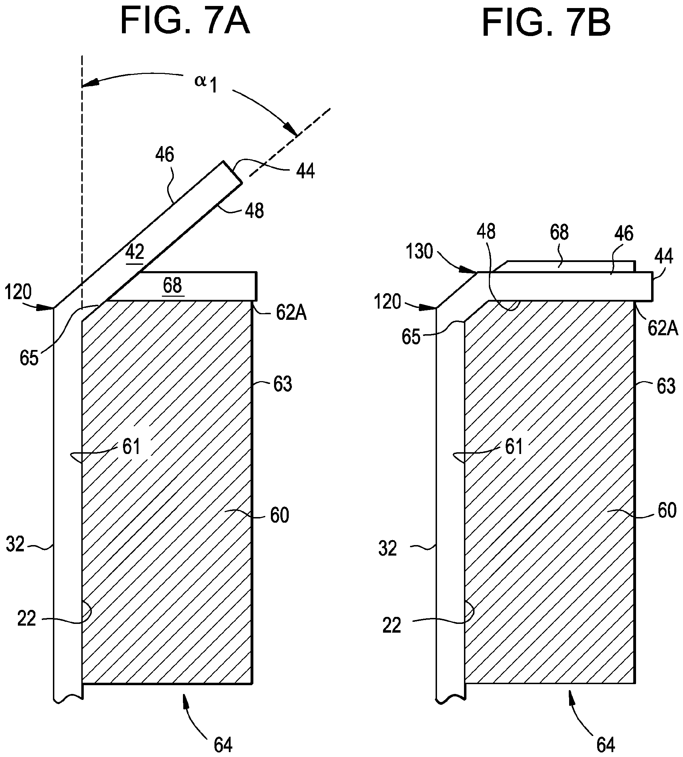

The radially outer circumferential edge 66 of nut 60 has a chamfer 65 where it meets planar surface 61. As shown in FIGS. 6A and 7A, the chamfer 65 extends at angle α2 relative to the first planar surface 61. In FIG. 6A, angle α2 is about 35 degrees plus or minus two degrees. In FIG. 7A, angle α2 is about 40 degrees plus or minus two degrees.

As shown in FIGS. 3 and 6A, the first tabs 42 of the washer 40 extend away from the first planar surface 22 by an angle α1 relative to the first planar surface 22. In one embodiment shown in FIG. 3, the angle α1 is about 28 degrees, plus or minus about 2 degrees. In another embodiment shown in FIG. 6A, the angle α1 is about 31 degrees, plus or minus about 2 degrees. In another embodiment shown in FIG. 7A, angle α1 is about 45 degrees plus or minus five degrees.

Although angle α1 and angle α2 are measured from different components, namely angle α1 is the angle between the first planar surface 22 and the first tab 42 of the washer 40 and angle α2 is the angle between the first planar surface 61 and the chamfer 65 of the nut 60, the magnitudes are approximately the same.

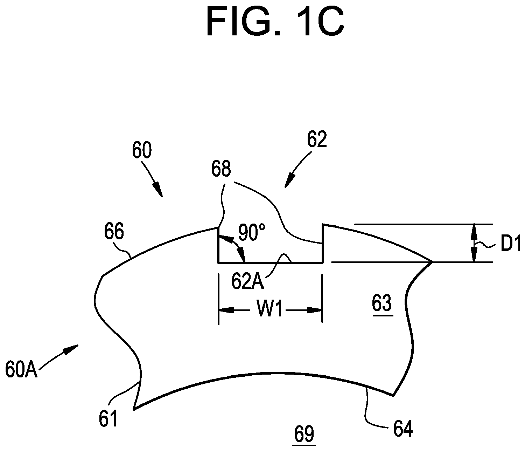

Referring to FIG. 1C, each one of the notches 62 of the nut 60 has an inner planar surface 62A which is substantially perpendicular to planar side portions 68. The side portions 68 meet the inner planar surface 62A at about a 90 degree angle. Each of the notches 62 has a length L1, a width W1, and is located at a depth D1 from the outer circumferential edge 66. The side portions 68 are separated at a distance of W1, such that each notch 62 is sized to accept the width of one of the first tabs 42. The first tabs 42 have a width sufficient to fit within W1 and are not thicker than D1.

Referring to FIG. 5A, each of the notches 62 of nut 60 are spaced evenly on outer circumferential edge 66. There are more first tabs 42 than notches 62. As shown in FIG. 5A, there are eight notches 62 spaced evenly on outer circumferential edge 66 at intervals of about forty-five degrees plus or minus five degrees, as indicated by angle ε. In another embodiment, notches are spaced asymmetrically on outer circumferential edge.

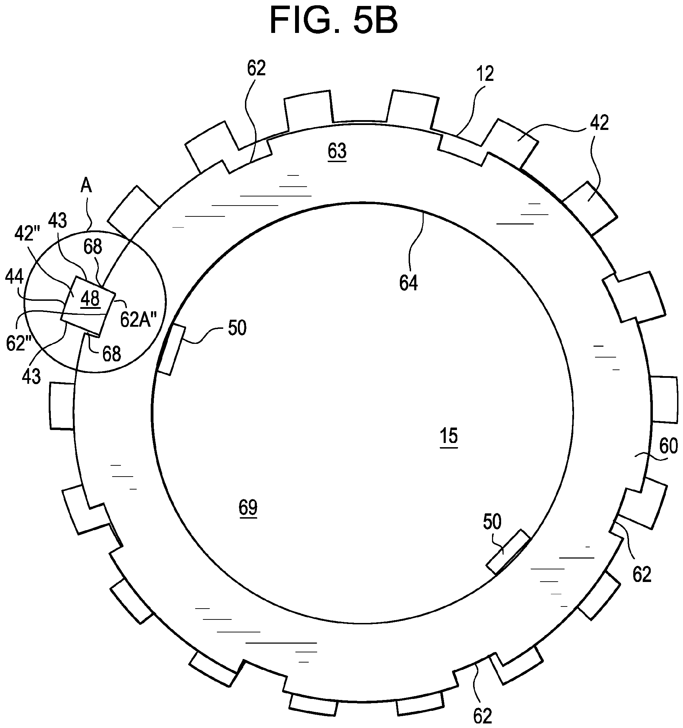

Referring to FIG. 6A, each of the tabs 42 of the washer 40 has an end portion 44 opposite a first bend 120. Each of the first tabs 42 has an outer planar surface 46 and an opposite inner planar surface 48. Each of the first tabs 42 further has a peripheral edge 43 that is substantially perpendicular to end portion 44 and formed between outer planar surface 46 and inner planar surface 48. Each of the first tabs 42 is cyclically bendable between a first position as shown in FIG. 7A and a second position as shown in FIG. 7B. When one of the first tabs 42 is aligned with a notch 62 of the nut 60, for example as shown in area A of FIG. 5B, it may be bent at second bend 130. A first tab 42 may be bent manually, for example with a parallel pin punch and a hammer, with a machine press, or by other means. As shown in FIG. 7B, the second bend 130 is located at the juncture where a radially outer edge 65A of the chamfer 65 intersects the planar surface 62A.

As shown in FIG. 6B, the first tab 42 is bent at second bend 130. The first tab 42 is parallel to the surface 62A of notch the 62, and is bent as much as angle θ. In the embodiment shown in FIG. 6B, angle θ is about 65 degrees plus or minus two degrees. In the embodiment shown in FIG. 7B, angle θ is about 52 degrees plus or minus three degrees relative to the chamfer 65. The inner planar surface 48 is engaged with the inner planar surface 62A. Further, peripheral edge 43 engages with the side portions 68 of notch 62.

As shown in FIG. 7B, once bent, the inner planar surface 48 of one of the first tabs 42 engages with the planar surface 62A of one of the notches 62. The end portion 44 extends beyond the second planar surface 63 in the embodiment shown in FIG. 7B. In another embodiment, the end portion 44 terminates at second planar surface 63. In another embodiment, the end portion 44 terminates without extending to second planar surface 63.

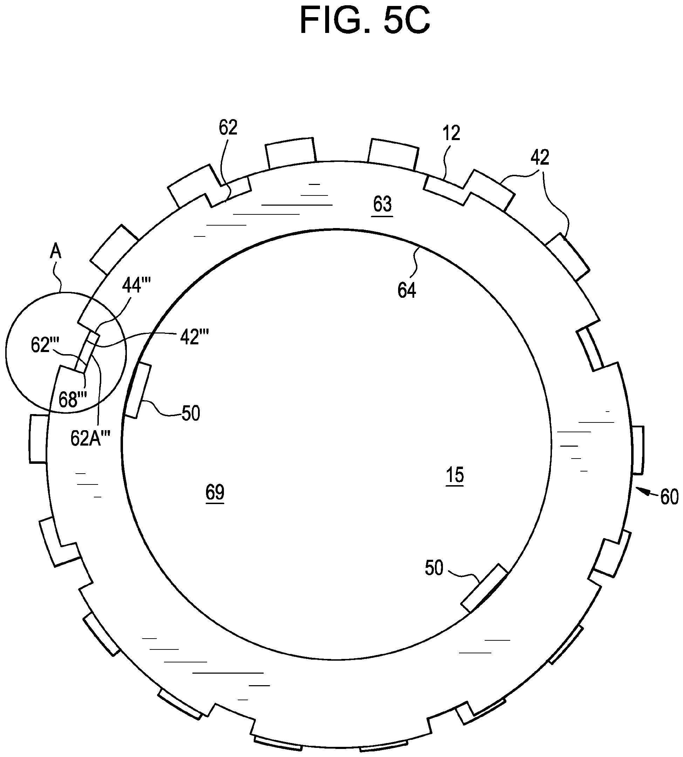

Referring now to FIGS. 5A, 5B, and 5C, the nut 60 is coaxial with the washer 40 when the nut and the washer are disposed over the threads 75 of the outer ring 70 shown in FIG. 1A. Two second tabs 50 are disposed in two grooves. FIG. 5A illustrates a configuration of nut 60 and washer 40 wherein none of the first tabs 42 are aligned with the notches 62, see particularly 42' and 62'.

Referring now to FIG. 5B, the nut 60 has been further rotated on the threads 75 and area A shows one of the first tabs 42 aligned with one of the notches 62, see particularly 42" and 62". Peripheral edge 43 and side portions 68 are aligned axially. Referring now to FIG. 5C, tab 42'" is bent and engages with notch 62'" so that inner planar surface 48'" engages with inner planar surface 62A'" and peripheral edge 43'" engages with side portions 68"'.

FIG. 6A illustrates the washer 40 and nut 60 before engagement. As shown in FIG. 1A, the washer 40 is disposed around the threads 75 and between the nut 60 and the axial facing surface 80B of the housing 80.

FIG. 6B illustrates the washer 40 engaged with the nut 60. Two of the first tabs 42 are bent and are engaging with two notches 62 as described above. As shown in FIG. 6B, the washer 40 is disposed with the first planar surface 22 of the washer 40 engaging with the first planar surface 61 of the nut 60. The second planar surface 32 of the washer 40 engages the second axial facing surface 80B as shown in FIG. 6B.

Referring to FIG. 6B showing a correctly-installed configuration, the second tabs 50 extend under the nut 60 and axially away from the first planar surface 22. This leads to a higher rigidity in the housing than a configuration where the second tabs extend axially away from the second planar surface 32 because of a shorter length L5 required of the groove 74 in the threads 75 on the outer ring 70. This further allows the nut 60 to be tightened to the second axial facing surface 80B, reducing washer failure.

Each of the second tabs 50 engage with one of the grooves 74, which enables the washer 40 to resist circumferential slippage with respect to the outer ring 70. This resistance to circumferential slippage permits the washer 40 to remain stationary while the nut 60 is being tightened so that some of the notches 62 of the nut 60 may be aligned with some of the first tabs 42 as shown in FIG. 5B. When some of the first tabs 42 are bent and engaged with some of the notches 62, the second tabs 50 of the washer 40 serve to resist circumferential slippage of the nut 60, reducing undesirable loosening or slippage of the bearing 10 during operation.

## Claims

1. A spherical bearing (10) comprising:
an inner ring at least partially disposed within an outer ring (70);
**characterized by**:
a first end of the outer ring (70) having an external threaded area (75) having at least two first grooves (84) formed therein, the first grooves (74, 84) being asymmetrically positioned;
an annular nut (60) having an internal thread and a plurality of notches (62) formed in an outer circumferential portion of the nut (60), the notches being axially oriented,
a washer (40) having an annular body (40A) defining a radially outer circumferential edge (12) and a radially inner circumferential edge (14) defining an opening, the threaded area (75) being positioned in the opening of the washer;
the annular body (40A) having a first planar surface (22) on one axial end thereof and a second planar surface (32) on an opposing axial end of the annular body;
the outer circumferential edge (12) has a plurality of first tabs (42) extending therefrom and in a direction away from the first planar surface (22) and the outer circumferential edge (12);
the inner circumferential edge (14) has at least two second tabs (50) extending therefrom and in a direction axially away from the first planar surface (22), the second tabs (50) being circumferentially aligned with and positioned in the first grooves (84);
each of the first tabs (42) are selectively bendable for engagement with one of the notches (62); and
there being at least one more first tabs (42) than notches (62).

2. The spherical bearing (10) of claim 1, **characterized in that** the second tabs (50) have an axial length (L3) greater than the axial length (L5) of the grooves (74, 84) and sufficient to prohibit positioning of the washer (40) on the threaded area (75) of the outer ring (70) when the first planar surface (22) is facing the first end of the outer ring (70).

3. The bearing (10) of claim 1, **characterized in that** the notches (62) are spaced symmetrically along the outer circumferential edge.

4. The bearing (10) of claim 1, **characterized in that** the notches (62) are spaced asymmetrically along the outer circumferential edge.

5. The bearing (10) of claim 1, **characterized in that** the first tabs (42) are cyclically bendable between a first position and a second position and later returned to an original plane without deformity.

6. The bearing (10) of claim 1, **characterized in that** the grooves (74) are identically sized or, **characterized in that** the grooves (84) are different sizes.

7. The bearing (10) of claim 1, **characterized in that** the notches (62) are different sizes.

8. The bearing (10) of claim 1, **characterized in that** the second tabs (50) have a second axial length (L3) greater than the length (L5) of the groove (74).

9. The bearing (10) of claim 1, **characterized in that** the washer (40) defines a second bend (82) that is spaced apart from an axial end of the groove (74) to eliminate stress on the tab resulting from contact with the axial end of the groove.

## Patentansprüche

1. Kugellager (10), das Folgendes umfasst:
einen Innenring, der mindestens teilweise innerhalb eines Außenrings (70) angeordnet ist;
**dadurch gekennzeichnet, dass**:
ein erstes Ende des Außenrings (70) eine externe Gewindefläche (75) aufweist, wobei mindestens zwei erste Nuten (84) darin gebildet sind, wobei die ersten Nuten (74, 84) asymmetrisch positioniert sind;
eine Ringmutter (60), die ein Innengewinde und eine Vielzahl von Kerben (62) aufweist, die in einem äußeren Umfangsabschnitt der Mutter (60) gebildet sind, wobei die Kerben axial ausgerichtet sind,
eine Unterlegscheibe (40), die einen ringförmigen Körper (40A) aufweist, der eine radial äußere Umfangskante (12) und eine radial innere Umfangskante (14) bestimmt, die eine Öffnung bestimmen, wobei die Gewindefläche (75) in der Öffnung der Unterlegscheibe positioniert ist;
der ringförmige Körper (40A) eine erste ebene Oberfläche (22) an dessen einem axialen Ende und eine zweite ebene Oberfläche (32) an einem entgegengesetzten axialen Ende des ringförmigen Körpers aufweist;
die äußere Umfangskante (12) eine Vielzahl von ersten Laschen (42) aufweist, die sich davon und in einer Richtung weg von der ersten ebenen Oberfläche (22) und der äußeren Umfangskante (12) erstrecken;
die innere Umfangskante (14) mindestens zwei zweite Laschen (50) aufweist, die sich davon und in einer Richtung axial weg von der ersten ebenen Oberfläche (22) erstrecken, wobei die zweiten Laschen (50) in Umfangsrichtung mit den ersten Nuten (84) ausgerichtet und darin positioniert sind;
die ersten Laschen (42) jeweils zum Eingreifen in eine der Kerben (62) selektiv biegbar sind; und
es mindestens eine erste Lasche (42) mehr als Kerben (62) gibt.

2. Kugellager (10) nach Anspruch 1, **dadurch gekennzeichnet, dass** die zweiten Laschen (50) eine axiale Länge (L3) aufweisen, die größer als die axiale Länge (L5) der Nuten (74, 84) und ausreichend ist, um ein Positionieren der Unterlegscheibe (40) auf der Gewindefläche (75) des Außenrings (70) zu verhindern, wenn die erste ebene Oberfläche (22) dem ersten Ende des Außenrings (70) zugewandt ist.

3. Lager (10) nach Anspruch 1, **dadurch gekennzeichnet, dass** die Kerben (62) entlang der äußeren Umfangskante symmetrisch beabstandet sind.

4. Lager (10) nach Anspruch 1, **dadurch gekennzeichnet, dass** die Kerben (62) entlang der äußeren Umfangskante asymmetrisch beabstandet sind.

5. Lager (10) nach Anspruch 1, **dadurch gekennzeichnet, dass** die ersten Laschen (42) zwischen einer ersten Position und einer zweiten Position zyklisch biegbar sind und nachfolgend ohne Verformung in eine ursprüngliche Ebene zurückgebracht werden können.

6. Lager (10) nach Anspruch 1, **dadurch gekennzeichnet, dass** die Nuten (74) gleich groß sind, oder **dadurch gekennzeichnet, dass** die Nuten (84) unterschiedlich groß sind.

7. Lager (10) nach Anspruch 1, **dadurch gekennzeichnet, dass** die Kerben (62) unterschiedlich groß sind.

8. Lager (10) nach Anspruch 1, **dadurch gekennzeichnet, dass** die zweiten Laschen (50) eine zweite axiale Länge (L3) aufweisen, die größer ist als die Länge (L5) der Nut (74).

9. Lager (10) nach Anspruch 1, **dadurch gekennzeichnet, dass** die Unterlegscheibe (40) eine zweite Biegung (82) bestimmt, die von einem axialen Ende der Nut (74) beabstandet ist, um eine Beanspruchung der Lasche zu beseitigen, die sich aus dem Kontakt mit dem axialen Ende der Nut ergibt.

## Revendications

1. Un palier sphérique (10) comprenant :
une bague intérieure au moins partiellement disposée à l'intérieur d'une bague extérieure (70) ;
**caractérisé par** :
une première extrémité de la bague extérieure (70) ayant une zone filetée externe (75) ayant au moins deux premières rainures (84) formées à l'intérieur d'elle, les premières rainures (74, 84) étant positionnées de manière asymétrique;
un écrou annulaire (60) ayant un filetage interne et une pluralité d'encoches (62) formées dans une partie circonférentielle extérieure de l'écrou (60), les encoches étant orientées axialement,
une rondelle (40) comprenant un corps annulaire (40A) définissant un bord circonférentiel (12) radialement extérieur et un bord circonférentiel (14) radialement intérieur définissant une ouverture, la zone filetée (75) étant positionnée dans l'ouverture de la rondelle ;
le corps annulaire (40A) ayant une première surface plane (22) sur une extrémité axiale de lui et une deuxième surface plane (32) sur une extrémité axiale opposée du corps annulaire ;
le bord circonférentiel extérieur (12) ayant une pluralité de premières languettes (42) s'étendant depuis lui et dans une direction opposée à la première surface plane (22) et au bord circonférentiel extérieur (12) ;
le bord circonférentiel intérieur (14) présente au moins deux deuxièmes languettes (50) s'étendant depuis lui et dans une direction axialement éloignée de la première surface plane (22), les deuxièmes languettes (50) étant alignées circonférentiellement avec les premières rainures (84) et positionnées dans celles-ci ;
chacune des premières languettes (42) étant apte à être pliée sélectivement pour un engagement avec l'une des encoches (62) ; et
il y a au moins une première languette (42) de plus que les encoches (62).

2. Le palier sphérique (10) selon la revendication 1, **caractérisé en ce que** les deuxièmes languettes (50) ont une longueur axiale (L3) supérieure à la longueur axiale (L5) des rainures (74, 84) et suffisante pour interdire le positionnement de la rondelle (40) sur la zone filetée (75) de la bague extérieure (70) lorsque la première surface plane (22) fait face à la première extrémité de la bague extérieure (70).

3. Le palier (10) selon la revendication 1, **caractérisé en ce que** les encoches (62) sont espacées symétriquement le long du bord circonférentiel extérieur.

4. Le palier selon la revendication 1, **caractérisé en ce que** les encoches (62) sont espacées de façon asymétrique le long du bord circonférentiel extérieur.

5. Le palier (10) selon la revendication 1, **caractérisé en ce que** les premières languettes (42) sont cycliquement pliables de manière cyclique entre une première position et une deuxième position et ensuite ramenées dans un plan d'origine sans déformation.

6. Le palier (10) selon la revendication 1, **caractérisé en ce que** les rainures (74) sont de taille identique, ou **caractérisé en ce que** les rainures (84) sont de tailles différentes.

7. Le palier (10) selon la revendication 1, **caractérisé en ce que** les encoches (62) sont de tailles différentes.

8. Le palier (10) selon la revendication 1, **caractérisé en ce que** les deuxièmes languettes (50) présentent une deuxième longueur axiale (L3) supérieure à la longueur (L5) de la rainure (74).

9. Le palier (10) selon la revendication 1, **caractérisé en ce que** la rondelle (40) définit un deuxième coude (82) qui est espacé d'une extrémité axiale de la rainure (74) pour éliminer les contraintes sur la languette résultant d'un contact avec l'extrémité axiale de la rainure.
